# EUROPÄISCHE PATENTSCHRIFT

(11) **EP 3 123 038 B1**
(45) Veröffentlichungstag und Bekanntmachung des Hinweises auf die Patenterteilung: **18.12.2019**
(21) Anmeldenummer: 15710809.3
(22) Anmeldetag: 20.03.2015
(51) Int. Cl.: F16C 33/46, F16C 43/04

(54) **WÄLZLAGERKÄFIG UND VERFAHREN ZUR MONTAGE EINES WÄLZLAGERKÄFIGS**
ROLLER BEARING CAGE AND METHOD FOR MOUNTING A ROLLER BEARING CAGE
CAGE DE PALIER À ROULEMENT ET SON PROCÉDÉ DE MONTAGE

(30) Priorität: 28.03.2014 DE 102014205817
(43) Veröffentlichungstag der Anmeldung: 01.02.2017
(73) Patentinhaber: Aktiebolaget SKF, 41 550 Göteborg (SE)
(72) Erfinder: BEYFUSS, Berthold, 97535 Kaisten (DE); FRIEDRICH, Hans-Jürgen, 97486 Königsberg-Römershofen (DE); HOFMANN, Sabine, 97072 Würzburg (DE); RADINA, Alfred, 97711 Poppenlauer (DE); SCHIERLING, Jonas, 97437 Hassfurt (DE); WAGNER, Gerhard, 97357 Prichsenstadt (DE); KRISTANDT, Holger, 97502 Euerbach (DE)
(74) Vertreter: Kuhstrebe, Jochen
(86) Internationale Anmeldenummer: PCT/EP2015/055924
(87) Internationale Veröffentlichungsnummer: WO 2015/144582

(56) Entgegenhaltungen:
- DE-A1- 4 112 506
- DE-A1- 10 011 651
- DE-A1-102011 004 374
- JP-A- 2010 090 955
- JP-A- 2013 036 573
- US-A1- 2013 294 718

## Beschreibung

Ausführungsbeispiele beziehen sich auf einen Wälzlagerkäfig und ein Verfahren zur Montage eines Wälzlagerkäfigs.

Zum Führen und Beabstanden von Wälzkörpern in einem Wälzlager werden oft Wälzlagerkäfige eingesetzt. Dazu ist eine Vielzahl von konventionellen Wälzlagerkäfigen bekannt. Es gibt konventionelle Wälzlagerkäfige, die zwei in Umfangsrichtung angeordnete Seitenringe aufweisen. Diese Seitenringe können über eine Mehrzahl von Stegen miteinander verbunden sein. Jeweils zwischen zwei Stegen und den Seitenringen bildet sich eine Tasche aus. In jede Tasche kann ein Wälzkörper aufgenommen werden.

Zur Montage in einem Wälzlager werden solche Wälzlagerkäfige meist zuerst mit den Wälzkörpern bestückt. Oft wird der Wälzlagerkäfig zuerst an einem Innenring montiert. Viele Innenringe weisen einen Bord auf. Wenn dann der mit den Wälzkörpern bestückte Wälzlagerkäfig an dem Innenring mit dem Bord montiert werden soll, müssen die Wälzkörper und der Seitenring über den Bord gezogen oder geschoben werden. Der Bord weist in vielen Fällen einen Durchmesser auf, der größer ist als ein Durchmesser, auf dem die Mittelachsen der Wälzkörper in dem Wälzlagerkäfig gehalten sind. Deshalb werden viele konventionelle Wälzlagerkäfige zur Montage aufgeweitet. Dazu wird der geschlossene Wälzlagerkäfig meist in radialer Richtung gedehnt. Nach der Montage wird der Seitenring wieder verengt bzw. wieder eingeholt. Dazu werden meist spezielle Werkzeuge benötigt.

Bei Käfigen mit einem großen Durchmesser ist das Aufweiten und Einholen nicht oder nur unter großen Schwierigkeiten möglich. Große Wälzlager können beispielsweise einen Außendurchmesser über 500 mm oder sogar über 1000 mm aufweisen. Deshalb werden bei vielen konventionellen großen Wälzlagern Wälzlagerkäfige in einem Schnappdesign einge-setzt. Dabei kann es sich beispielsweise um sogenannte H-Käfige handeln. Die Herstellung solcher Wälzlagerkäfige kann jedoch relativ aufwändig sein. Zudem kann sich auch die Montage aufwändig oder sogar schwierig gestalten. Gründe dafür können beispielsweise eine große Masse des Käfigs und das Schnappdesign sein. Beispielsweise ist aus der US 2013/294718 A1 ein Wälzlagerkäfig bekannt, der eine Öffnungsstelle aufweist. Diese kann entweder über einen Steg oder ein Spannschloss verschlossen werden. Die JP 2013-36573 zeigt einen Käfig mit verbesserten Öffnungsstellen, wobei die Fertigstellung des Käfigs durch Schweißen der Enden automatisiert werden kann.

Es besteht daher ein Bedarf daran, ein Konzept zur Verbesserung der Montage eines Wälzlagerkäfigs bereitzustellen. Diesem Bedarf tragen ein Wälzlagerkäfig sowie das Verfahren zur Montage des Wälzlagerkäfigs nach den unabhängigen Ansprüchen Rechnung.

Gemäß einem Aspekt betreffen Ausführungsbeispiele einen Wälzlagerkäfig der als Werkstoff einen Stahl umfasst. Der Wälzlagerkäfig besitzt wenigstens einen Seitenring. Der Seitenring erstreckt sich in eine Umfangsrichtung. Ein weiterer Seitenring ist vorhanden. Alternativ kann auch nur ein hier nicht beanspruchter einzelner Ring, der die Taschen zu Aufnahme der Wälzkörper verbindet, mittig angeordnet sein. Dieser kann ebenfalls als Seitenring betrachtet werden. Der zumindest eine Seitenring weist eine Öffnungsstelle auf. An der Öffnungsstelle kann der Seitenring geöffnet werden. So kann ein Umfang des Seitenrings zu einer Montage des Wälzlagerkäfigs aufgeweitet werden Zudem weist der Wälzlagerkäfig einen Außendurchmesser auf, der größer als 500 mm ist.

Dadurch, dass der Seitenring eine Öffnungsstelle aufweist, kann eine Montage und eine Herstellung eines Wälzlagerkäfigs aus Stahl für ein Großwälzlager vereinfacht werden.

Der Wälzlagerkäfig könnte also über einen Bord oder Innenringbord gezogen werden, der einen größeren Durchmesser aufweist als der Seitenring in einem geschlossenen Zustand.

So können die Wälzkörper bei manchen Ausführungsbeispielen korrekt in axialer Richtung neben dem Bord positioniert werden. Mit anderen Worten kann der Seitenring bzw. der Wälzlagerkäfig zur Montage an der Öffnungsstelle auseinander gezogen oder getrennt werden.

Die Öffnungsstelle kann also ggf. auch als eine Trennstelle ausgebildet sein. Wenn der Seitenring an der Trennstelle auseinandergespreizt wird, kann sich bei manchen Ausführungsbeispielen ein Umfangsmaß des Seitenrings oder auch des Wälzlagerkäfigs vergrößern.

Ein Abstand zwischen zwei Trennflächen der Öffnungsstelle kann sich dann ebenfalls vergrößern. Dazu muss sich ein Umfang des Seitenrings bei manchen Ausführungsbeispielen nicht zwingend gleichmäßig verändern. Eine Form des Seitenrings kann sich bei einem Auseinanderspreizen an der Öffnungsstelle verändern. Beispielsweise kann sich die Form von einem Kreisring zu einem Oval oder einer anderen Form verändern. Nach einem Schließen der Öffnungsstelle kann der Seitenring oder der Wälzlagerkäfig wieder seine ursprüngliche Form annehmen.

Bei manchen Ausführungsbeispielen kann der Wälzlagerkäfig einen Durchmesser aufweisen, der größer als, 500 mm, 600 mm, 700 mm, 800 mm, 1000 mm, 1100 mm, 1200 mm, 1300 mm,1400 mm, 1500 mm, 1600 mm, 1700 mm, 1800 mm, 2000 mm, 2100 mm, 2200 mm, 2400 mm, 2500 mm, 2700 mm, 2800 mm, 2900 mm, 3000 mm ist.

Die Öffnungsstelle ist genau eine einzige Öffnungsstelle. So kann bei manchen Ausführungsbeispielen ermöglicht werden, dass der Wälzlagerkäfig seine Funktion wie ein unsegmentierter Wälzlagerkäfig erfüllen kann. Trotzdem kann der Wälzlagerkäfig, weil er die Öffnungsstelle aufweist, besser montiert werden. Auch wenn der Seitenring eine Mehrzahl von Öffnungsstellen aufweist, teilen diese den Wälzlagerkäfig nicht in eine Mehrzahl von Wälzlagerkäfigsegmenten. Ferner kann der Seitenring einen Kipp- oder Scharnierbereich aufweisen. Der Kipp- oder Scharnierbereich kann der Öffnungsstelle in radialer Richtung gegenüber liegen. So kann bei manchen Ausführungsbeispielen ermöglicht werden, dass der Seitenring an der Öffnungsstelle weiter geöffnet werden kann. Dies könnte beispielsweise dann wichtig sein, wenn der Seitenring aus einem sehr steifen Material besteht. Der Scharnier- oder Kippbereich kann ggf. so ausgebildet sein, dass er sich leichter verformen lässt als andere Bereiche des Seitenrings. Dazu kann der Scharnier- oder Kippbereich beispielsweise ein Scharnier umfassen. Ferner kann der Scharnier- oder Kippbereich auch perforiert ausgebildet sein. Ergänzend oder alternativ kann der Scharnier- oder Kippbereich einen geringeren Durchmesser, eine geringere Dicke oder eine geringere Höhe als andere Bereiche des Seitenrings aufweisen. Der Scharnier- oder Kippbereich kann ergänzend oder alternativ auch aus einem elastischeren oder weicheren Material, als andere Bereiche des Seitenrings, ausgebildet sein.

Analog zu dem ersten Seitenring kann auch der weitere bzw. zweite Seitenring eine Öffnungsstelle aufweisen. So kann bei manchen Ausführungsbeispielen der Wälzlagerkäfig besser zur Montage geöffnet werden. Der erste und der zweite Seitenring können beispielsweise über eine Mehrzahl von Stegen miteinander verbunden sein. Jeweils zwischen zwei Stegen kann ggf. ein Wälzkörper in einer Tasche aufgenommen sein. Die Tasche kann sich zur Aufnahme jedweder Art von Wälzkörper eignen. Beispielsweise kann die Tasche ausgebildet sein, um eine Zylinderrolle, eine sphärische Rolle, eine Kegelrolle oder eine Kugel aufzunehmen. So kann der Wälzlagerkäfig gemäß manchen Ausführungsbeispielen in einem Zylinderrollenlager (z.B. CRB), einem Kegelrollenlager (z.B. TRB), einem sphärischen Rollenlager (z.B. SRB), einem Kugelrollenlager oder dergleichen eingesetzt werden.

Die Öffnungsstellen der beiden Seitenringe können fluchtend zueinander angeordnet sein. Mit anderen Worten ausgedrückt liegen die beiden Öffnungsstellen in axialer Richtung übereinander. Die Öffnungsstellen können also an einer gleichen Winkelposition der beiden Seitenringe bzw. des Wälzlagerkäfigs angeordnet sein. Dadurch, dass die Öffnungsstellen der beiden Seitenringe an der gleichen Winkelposition des Wälzlagerkäfigs angeordnet sind, können die beiden Öffnungsstellen eine gemeinsame Öffnungsstelle des Wälzlagerkäfigs ausbilden. So kann bei manchen Ausführungsbeispielen der Wälzlagerkäfig an einer einzigen Öffnungsstelle auseinandergespreizt und geöffnet werden.

Der zweite Seitenring weist einen größeren Durchmesser auf als der erste Seitenring. So kann sich der Wälzlagerkäfig zum Führen der Wälzkörper in einem Kegelrollenlager eignen. Bei manchen, solcher Ausführungsbeispiele kann der zweite Seitenring geschlossen bzw. ohne Trenn- oder Öffnungsstelle ausgebildet sein. Der Wälzlagerkäfig könnte dann trotzdem an dem Innenring mit dem Bord montiert werden. Dies kann beispielsweise möglich sein, weil der zweite Seitenring mit dem größeren Durchmesser auch einen größeren Durchmesser als der Bord des Innenrings aufweisen kann. So könnte der zweite Seitenring, obwohl er geschlossen ist, über den Bord des Innenrings geführt werden. Der erste Seitenring mit dem kleineren Durchmesser kann dann, um den Bord zu überwinden, an der Öffnungsstelle getrennt werden. Natürlich kann auch der zweite Seitenring mit dem größeren Durchmesser eine Öffnungsstelle aufweisen. Alternativ können hier nicht beanspruchte Seitenringe jeweils einen Durchmesser aufweisen, der gleich groß ist. Wälzlagerkäfige gemäß diesen Ausführungsbeispielen können dann ggf. zum Führen der Wälzkörper in zylindrischen Lagern dienen.

Bei einigen weiteren Ausführungsbeispielen weist der Wälzlagerkäfig ein Verschlusselement auf. Die Öffnungsstelle kann mit dem Verschlusselement verschlossen oder verbunden werden. So könnte ein Umfang des Seitenrings nach der Montage fixiert und der Seitenring bzw. der Wälzlagerkäfig nach der Montage an dem Innenring gehalten werden. Ein unbeabsichtigtes Lösen des Wälzlagerkäfigs von dem Innenring könnte dann evtl. vermieden werden. Beispielsweise kann der Seitenring das Verschlusselement umfassen. Unter Umständen kann jeder der Seitenringe ein eigenes Verschlusselement aufweisen. Ergänzend oder alternativ kann das Verschlusselement ausgebildet sein, um die Öffnungsstellen der Seitenringe gleichzeitig zu verschließen. Beispielsweise kann das Verschlusselement eine Klebe-, Schweiß-, Lötverbindung oder dergleichen sein.

Das Verschlusselement kann wieder lösbar ausgebildet sein. So kann bei manchen Ausführungsbeispielen der Wälzlagerkäfig wieder einfach demontiert werden. Mit anderen Worten ausgedrückt könnte das Verschlusselement ein zerstörungsfreies erneutes Spreizen oder Öffnen des Seitenrings an der Öffnungsstelle zulassen. Beispielsweise kann das Verschlusselement eine Schraub-, Niet-, Klipp-, Spannverbindung oder dergleichen sein.

Die Öffnungsstelle weist zwei Enden auf. Die Enden überlappen sich zumindest teilweise in Umfangsrichtung. Dies kann zumindest in einem geschlossenen Zustand des Seitenrings der Fall sein. So kann bei manchen Ausführungsbeispielen eine ausreichende Fläche zum Anbringen des Verschlusselements bereitgestellt werden. Beispielsweise kann jedes der Enden eine Teilfläche aufweisen. In einem geschlossenen Zustand können sich die beiden Teilflächen berühren. In einem geöffneten oder gespreizten Zustand kann ggf. eine Lücke oder ein Spalt zwischen den beiden Teilflächen entstehen. Bei einigen weiteren Ausführungsbeispielen können die Teilflächen auch so ausgebildet sein, dass sie in einem geschlossenen Zustand keinen Kontakt zueinander aufweisen. Ggf. können die Teilflächen dann über das Verbindungselement zueinander fixiert sein.

Alternativ können die Teilflächen auch stumpf aneinander stoßen. Dies kann evtl. in einem geschlossen Zustand der Fall sein. Dadurch kann bei manchen Ausführungsbeispielen die Öffnungsstelle sehr einfach hergestellt werden. Beispielsweise könnte die Öffnungsstelle dann als ein einfacher Schnitt in den Seitenring eingebracht werden. Mit anderen Worten ausgedrückt, kann die Öffnungsstelle als ein Spalt ausgebildet sein.

Bei einigen weiteren Ausführungsbeispielen weist zumindest einer der Seitenringe eine Mehrzahl von Ausschnitten auf. Die Ausschnitte dienen zur Aufnahme der Stege. In jeden der Ausschnitte kann ein Steg bzw. ein Ende eines Stegs eingesetzt sein. So kann bei manchen Ausführungsbeispielen der Wälzlagerkäfig aus zwei Seitenringen, die über Stege verbunden sind, aufgebaut sein. Diese Einzelteile können gemäß manchen Ausführungsbeispielen auf einfache Art und Weise hergestellt sein. Dadurch, dass die Seitenringe die Ausschnitte zur Aufnahme der Stege aufweisen, kann bei manchen Ausführungsbeispielen ein stabiler Wälzlagerkäfig bereitgestellt werden. Dieser könnte sich auch für Großlager eignen. Die Mehrzahl der Ausschnitte kann beispielsweise an einer radial nach außen gerichteten Umfangsfläche des Seitenrings angeordnet sein.

Bei einigen weiteren Ausführungsbeispielen sind die Stege stumpf zwischen den Seitenringen angeordnet. Die Stege können dabei an einer Fläche des Seitenrings befestigt sein. Die Fläche kann beispielsweise in eine axiale Richtung gerichtet und dem anderen Seitenring zugewandt sein. So kann bei manchen Ausführungsbeispielen eine Ausdehnung bzw. ein Bauraum des Wälzlagerkäfigs in eine radiale Richtung möglichst gering gehalten werden.

Ein Querschnitt des Seitenrings kann L-förmig sein. So kann bei manchen Ausführungsbeispielen der Seitenring eine größere An- bzw. Auflagefläche für die Stege aufweisen. Der Seitenring kann so ausgebildet sein, dass der Steg an dem Seitenring eine Anschlagfläche in axialer Richtung erhält. Ferner kann der Steg auch eine Anschlagfläche in radialer Richtung an dem Seitenring erhalten. So kann bei manchen Ausführungsbeispielen ein stabiler Wälzlagerkäfig, der sich auch zum Führen von Wälzkörpern in großen Wälzlagern eignet, bereitgestellt werden. Bei einigen weiteren Ausführungsbeispielen kann der Seitenring jedweden Querschnitt aufweisen. Beispielsweise kann der Querschnitt rechteckig, quadratisch, viereckig, trapezförmig, vieleckig, rund, als Kreisscheibe, als Kreisringscheibe oder dergleichen ausgebildet sein.

Gemäß einem Aspekt betreffen Ausführungsbeispiele ein Verfahren. Mit dem Verfahren kann ein Wälzlagerkäfig montiert werden. Dazu wird ein Seitenring des Wälzlagerkäfigs an einer Öffnungsstelle geöffnet. Anschließend wird der geöffnete Wälzlagerkäfig in das Wälzlager montiert. Nach der Montage des Wälzlagerkäfigs in dem Wälzlager wird der Seitenring verschlossen. Dadurch, dass der Seitenring zur Montage geöffnet ist, kann bei manchen Ausführungsbeispielen der Seitenring an einem Innenring mit einem Bord montiert werden. Dies könnte in manchen Fällen ohne aufwändiges Werkzeug erfolgen. Zum Öffnen des Seitenrings können die Teilflächen an der Öffnungsstelle auseinandergespreizt bzw. auseinandergezogen werden.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt eine schematische Darstellung einer perspektivischen Ansicht eines Wälzlagerkäfigs mit Wälzkörpern in einem geöffneten Zustand gemäß einem Ausführungsbeispiel an einem Innenring;
Fig. 2 zeigt eine schematische Darstellung eines vergrößerten Ausschnitts der Fig. 1;
Fig. 3 zeigt eine schematische Darstellung einer geschnittenen Seitenansicht des Wälzlagerkäfigs in einem geöffneten Zustand an dem Innenring gemäß Fig. 1;
Fig. 4 zeigt eine schematische Darstellung einer Draufsicht des Wälzlagerkäfigs in einem geöffneten Zustand an dem Innenring gemäß Fig. 1;
Fig. 5 zeigt eine schematische Darstellung einer perspektivischen Ansicht des Wälzlagerkäfigs gemäß Fig. 1 in einem geschlossenen Zustand;
Fig. 6 zeigt eine schematische Darstellung eines vergrößerten Ausschnitts der Fig. 5;
Fig. 7 zeigt eine schematische Darstellung einer perspektivischen Ansicht des Wälzlagerkäfigs gemäß Fig. 5 in einem geöffneten Zustand;
Fig. 8 zeigt eine schematische Darstellung eines vergrößerten Ausschnitts der Fig. 7;
Fig. 9 zeigt eine schematische Darstellung einer geschnittenen Seitenansicht des Wälzlagerkäfigs mit Wälzkörpern gemäß Fig. 1 in einem geschlossenen Zustand an dem Innenring;
Fig. 10 zeigt eine schematische Darstellung eines vergrößerten Ausschnitts einer perspektivischen Ansicht des Wälzlagerkäfigs von vorne in einem geöffneten Zustand gemäß einem Ausführungsbeispiel;
Fig. 11 zeigt eine schematische Darstellung eines Ausschnitts einer perspektivischen Ansicht des Wälzlagerkäfigs der Fig. 10 von hinten;
Fig. 12 zeigt eine schematische Darstellung eines Ausschnitts einer perspektivischen Ansicht des Wälzlagerkäfigs der Fig. 10 in einem geschlossenen Zustand;
Fig. 13 zeigt eine schematische Darstellung einer Explosionsansicht des Wälzlagerkäfigs gemäß einem Ausführungsbeispiel;
Fig. 14 zeigt eine schematische Darstellung eines Ausschnitts einer geschnittenen Seitenansicht eines Wälzlagerkäfigs mit Wälzkörpern an einem Innenring gemäß einem weiteren Ausführungsbeispiel;
Fig. 15 zeigt eine schematische Darstellung eines Ausschnitts einer perspektivischen Darstellung des Wälzlagerkäfigs nach dem Ausführungsbeispiel der Fig. 14;
Fig. 16 zeigt eine schematische Darstellung eines Ausschnitts einer weiteren perspektivischen Ansicht des Wälzlagerkäfigs nach dem Ausführungsbeispiel der Fig. 14 und 15;
Fig. 17 zeigt eine schematische Darstellung einer Seitenansicht eines Blechstreifens mit einem Schneidspalt zur Herstellung der Stege des Wälzlagerkäfigs gemäß einem Ausführungsbeispiel;
Fig. 18 zeigt eine schematische Darstellung einer Draufsicht des Blechstreifens gemäß Fig. 17;
Fig. 19 zeigt eine schematische Darstellung einer perspektivischen Ansicht des Blechstreifens der Fig. 17 und 18; und
Fig. 20 zeigt eine schematische Darstellung einer Seitenansicht eines Seitenrings eines Wälzlagerkäfigs gemäß einem weiteren Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

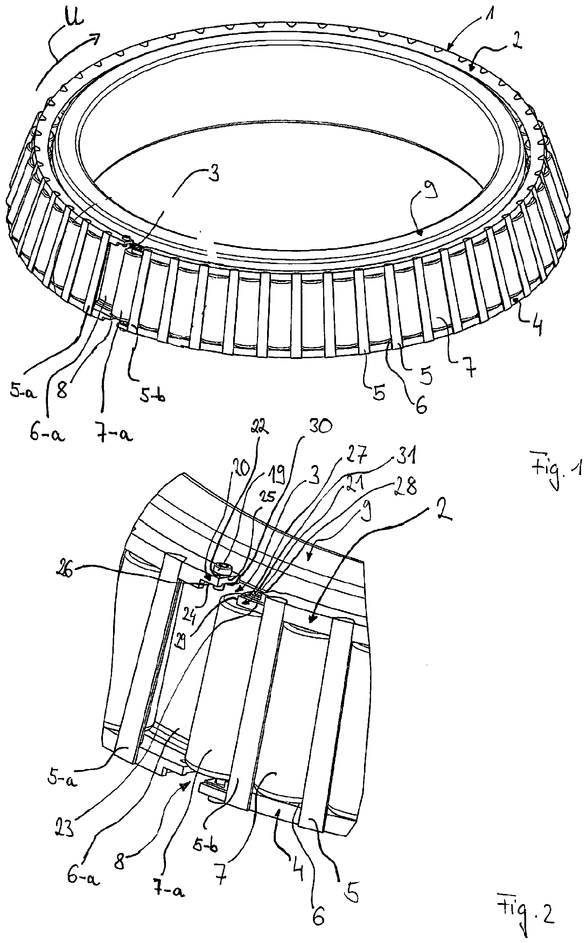

Die Fig. 1 bis 4 zeigen unterschiedliche Ansichten eines Wälzlagerkäfigs mit Wälzkörpern in einem geöffneten Zustand gemäß einem Ausführungsbeispiel an einem Innenring eines Wälzlagers.

Wie in Fig. 1 dargestellt, umfasst ein Wälzlagerkäfig 1 einen Seitenring 2. Der Seitenring 2 erstreckt sich in eine Umfangsrichtung U. Der Seitenring 2 weist eine Öffnungsstelle 3 auf. An der Öffnungsstelle 3 kann der Seitenring 2 geöffnet bzw. getrennt werden. Beim Öffnen bzw. Trennen der Öffnungsstelle 3 wird ein Umfang des Seitenrings 2 aufgeweitet. Der Seitenring 2 wird beispielsweise zur Montage des Wälzlagerkäfigs 1 geöffnet. Der Wälzlagerkäfig 1 ist aus Stahl hergestellt und weist einen Durchmesser auf, der größer als 500 mm ist.

Der Wälzlagerkäfig 1 umfasst einen zweiten Seitenring 4. Der zweite Seitenring 4 erstreckt sich ebenfalls in Umfangsrichtung U. Der erste Seitenring 2 und der zweite Seitenring 4 sind über eine Mehrzahl von Stegen 5 miteinander verbunden. Jeweils zwischen zwei Stegen 5, dem Seitenring 2 und dem zweiten Seitenring 4 wird eine Tasche 6 ausgebildet. Die Tasche 6 dient zur Aufnahme eines Wälzkörpers 7. Bei dem Ausführungsbeispiel der Fig. 1 bis 4 ist in jeder Tasche 6 des Wälzlagerkäfigs 1 ein Wälzkörper 7 aufgenommen.

Der Wälzlagerkäfig 1 weist als Form einen Kegelstumpf auf. Ein Durchmesser des zweiten Seitenrings 4 ist größer ausgebildet als ein Durchmesser des ersten Seitenrings 2. Damit eignet sich der Wälzlagerkäfig 1 zum Führen von Wälzkörpern 7, die Kegelrollen sind. Der Wälzlagerkäfig 1 könnte also in einem Kegelrollenlager eingesetzt werden.

Bei einigen weiteren, nicht dargestellten Ausführungsbeispielen kann der Wälzlagerkäfig Seitenringe mit identischen oder im Wesentlichen identischen Durchmessern aufweisen. Mit anderen Worten ausgedrückt können die Seitenringe gleich groß sein. Beispielsweise kann sich der Wälzlagerkäfig bei manchen Ausführungsbeispielen dann zum Führen von Wälzkörpern eignen, die Zylinderrollen sind.

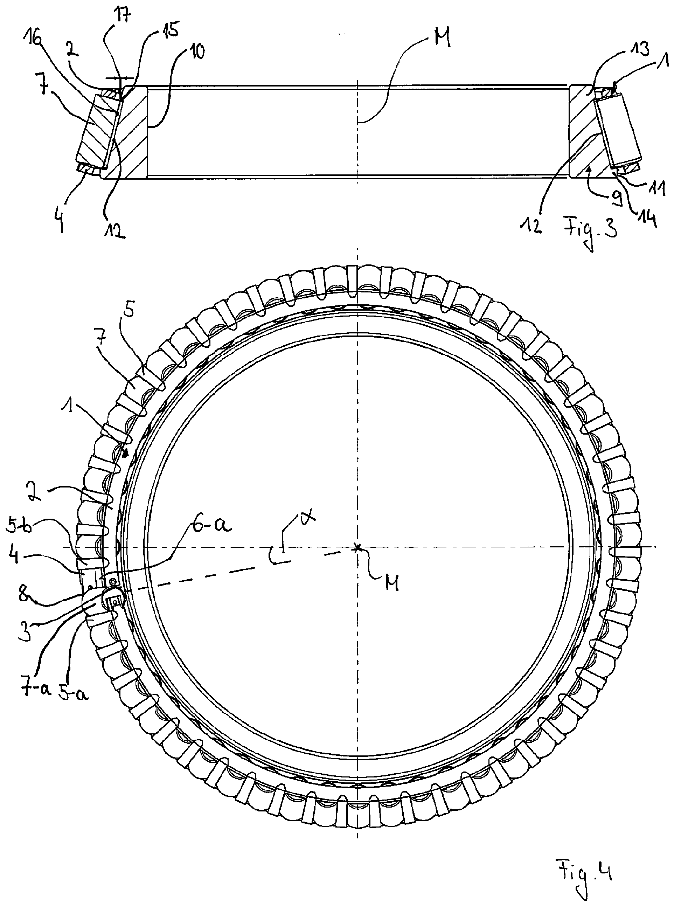

Der zweite Seitenring 4 weist ebenfalls eine Öffnungsstelle 8 auf. Die Öffnungsstellen 3 und 8 der beiden Seitenringe 2 und 4 sind jeweils zwischen zwei benachbarten Stegen 5-a und 5-b angeordnet. Damit kann der Wälzlagerkäfig 1 an einer Tasche 6-a geteilt werden. Mit anderen Worten ausgedrückt befinden sich die beiden Öffnungsstellen 3 und 8 an dergleichen Winkelposition a. Die Winkelposition a befindet sich dabei auf einem gedachten Kreis, dessen Mittelpunkt die Mittelachse M des Wälzlagerkäfigs 1 ist. Dies ist in der Draufsicht der Fig. 4 erkennbar. In der Tasche 6-a ist ein Wälzkörper 7-a aufgenommen. Der Wälzkörper 7-a ist auf der gleichen Seite in Umfangsichtung U neben der Öffnungsstelle 3 bzw. 8 angeordnet.

Zur Montage in einem Wälzlager wird der Wälzlagerkäfig 1 an einem Innenring 9 angeordnet. Dies ist in Fig. 3 gezeigt. Der Innenring 9 weist eine zylindrische Innenbohrung 10 auf. Der Innenring 9 und dessen Bohrung 10 sind konzentrisch zu einer Mittelachse M des Wälzlagerkäfigs ausgerichtet. Der Innenring 9 weist eine nach radial außen gerichtete Umfangsfläche 11 auf. An der Umfangsfläche 11 weist der Innenring 9 eine konische Lauffläche 12 auf. Die Wälzkörper 7 rollen in einem montierten Zustand auf der Lauffläche 12 ab. Ferner weist der Innenring 9 einen Bord 13 auf. Der Bord 13 stellt eine Begrenzung für die Wälzkörper 7 in eine axiale Richtung M dar. Der Bord 13 befindet sich an einem axialen Ende des Innenrings 9. Dieses Ende weist einen kleineren Durchmesser auf als ein in axialer Richtung gegenüberliegendes Ende. An dem in axialer Richtung gegenüberliegenden Ende mit einem größeren Durchmesser weist der Innenring 9 einen Bord 14 auf. Zur Montage des Wälzlagerkäfigs 1 sind die Wälzkörper 7 bereits in dem Wälzlagerkäfig 1 bzw. den Taschen 6 aufgenommen. Der Wälzlagerkäfig 1 wird zur Montage geöffnet. Dazu werden die Seitenringe 2 und 4 jeweils an den Öffnungsstellen 3 und 8 auseinandergezogen. So kann ermöglicht werden, dass der Wälzlagerkäfig 1 und damit auch die Wälzkörper 7 über den Bord 13 des Innenrings 9 gezogen werden können. Dabei wird der Wälzlagerkäfig in eine Richtung, die sich von dem Bord 13 zu dem Bord 15 erstreckt, über den Innenring 9 gestreift.

Wie in Fig. 3 erkennbar, besteht zwischen einer dem Wälzkörper 7 zugewandten Kante 15 des Bords 13 und einer Lauffläche 16 der Wälzkörper 7 ein Spalt 17. Fig. 3 zeigt eine Situation, in der der Wälzlagerkäfig an den Öffnungsstellen 3 und 8 noch nicht wieder verschlossen ist. In einem geöffneten Zustand der Seitenringe 2 und 4 ist es möglich, dass die Laufflächen 16 der Wälzkörper 7 auf einem größeren Durchmesser liegen als eine nach radial außen gerichtete Kante 15 des Bords 13. So kann der Wälzlagerkäfig 1 bei dem Ausführungsbeispiel der Figuren an dem Innenring 9 montiert werden.

Bei einigen weiteren, nicht dargestellten Ausführungsbeispielen kann nur der erste Seitenring die Öffnungsstelle aufweisen. Weil der zweite Seitenring einen größeren Durchmesser als der Bord aufweist, könnte der Wälzlagerkäfig trotzdem an dem Innenring montiert werden.

Nach dem Positionieren an dem Innenring wird der Wälzlagerkäfig 1 geschlossen. Dazu wird der Seitenring 2 wieder an seiner Öffnungsstelle 3 zusammengefügt. Analog wird auch der Seitenringe 4 wieder an seiner Öffnungsstelle 8 zusammengefügt. Dies kann beispielsweise dadurch erfolgen, dass eine Kraft, mit der die Seitenringe 2 und 4 gespreizt wurden, wieder entfernt wird. Ergänzend oder alternativ können die Seitenringe 2 und 4 auch zusammengedrückt werden, sodass sie sich schließen.

Bei einigen weiteren, nicht dargestellten Ausführungsbeispielen kann anschließend ein Außenring des Wälzlagers montiert werden.

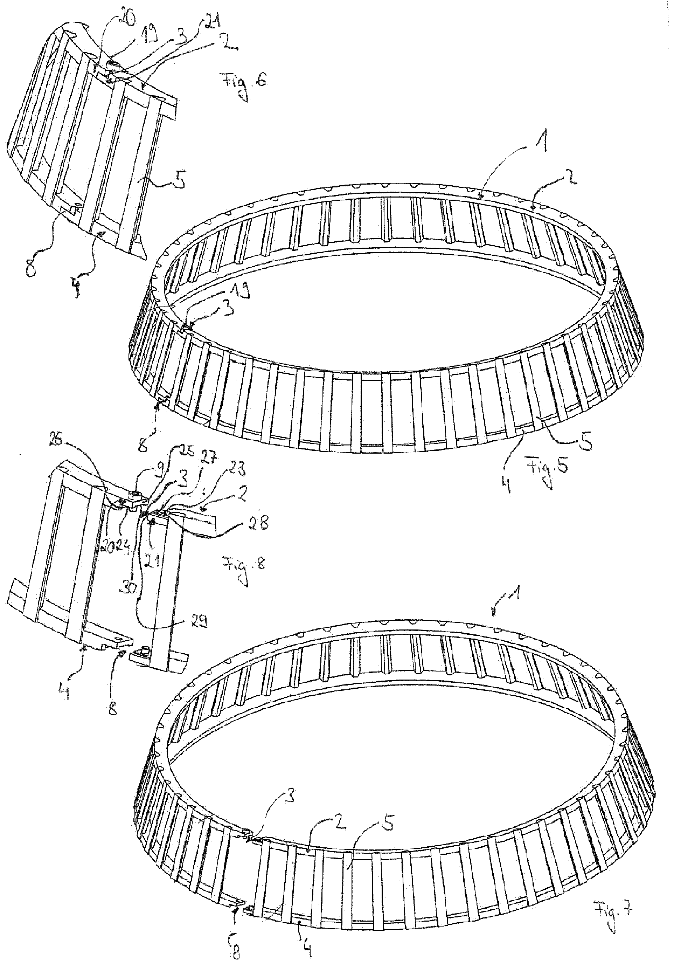

Die Fig. 5 bis 8 zeigen unterschiedliche Darstellungen des Wälzlagerkäfigs 1 in geschlossenen und offenen Zuständen. Der Übersichtlichkeit halber sind die Wälzkörper und der Innenring ausgeblendet.

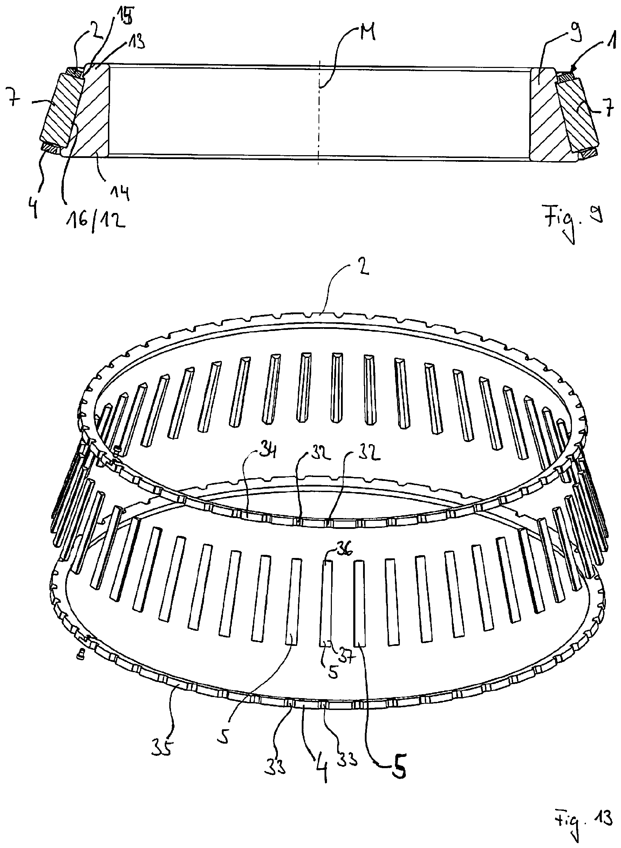

Fig. 9 zeigt eine schematische Darstellung einer geschnittenen Seitenansicht des Wälzlagerkäfigs 1 mit Wälzkörpern 7 gemäß Fig. 1 in einem geschlossenen Zustand an dem Innenring 9.

Durch das Zusammenfügen, Schließen bzw. Verschließen der Seitenringe 2 und 4 können die Seitenringe 2 und 4 jeweils wieder ihren ursprünglichen Umfang einnehmen. Diesen benötigen sie für ihre Funktion in dem Lager. Wenn die Seitenringe 2 und 4 jeweils an ihren Öffnungsstellen 3 und 8 verschlossen sind, verkleinert sich der Umfang des Wälzlagerkäfigs 1. Bei dem in Fig. 9 gezeigten, geschlossenen Zustand ist kein Spalt mehr zwischen dem Bord 15 und der Lauffläche 16 des Wälzkörpers 7 vorhanden. Nach dem Schließen der Seitenringe 2 und 4 liegen die Wälzkörper 7 mit ihren Laufflächen 16 an der Lauffläche 12 des Innenrings 9 an. Die Wälzkörper 7 können jetzt auf einem Innendurchmesser gehalten werden, der kleiner ist als ein Innendurchmesser des Bords 13, auf dem die Kante 15 liegt. So kann bei manchen Ausführungsbeispielen ggf. verhindert werden, dass die Wälzkörper 7 und auch der Wälzlagerkäfig 1 in axialer Richtung von dem Innenring 9 gleiten können.

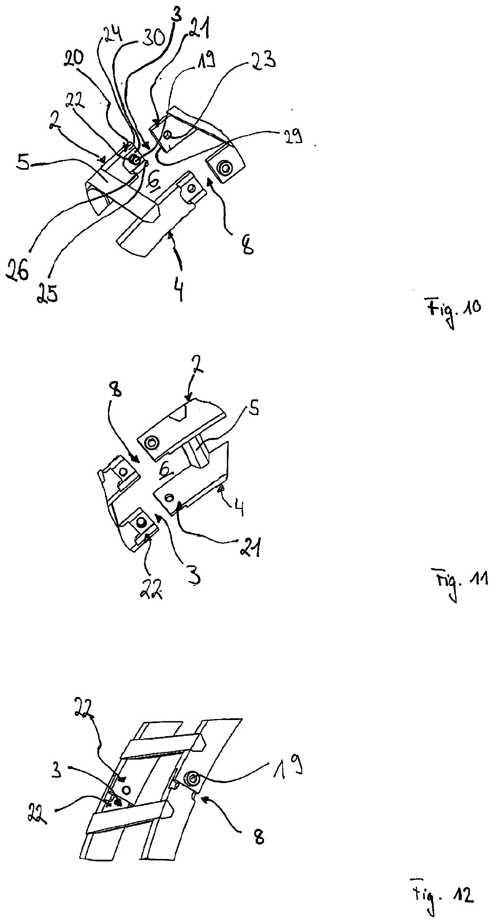

Die Fig. 10 bis 12 zeigen unterschiedliche perspektivische Ansichten der Öffnungsstellen 3 und 8 des Wälzlagerkäfigs 1. Die Öffnungsstellen 3 und 8 sind im Wesentlichen analog ausgebildet. Dies ist in den vergrößerten Ansichten der Fig. 2, 6, 8, 10, 11 und 12 erkennbar. Deshalb wird im Folgenden nur die Ausgestaltung der Öffnungsstelle 3 anhand der Fig. 2 beschrieben.

An der Öffnungsstelle 3 weist der Seitenring 2 ein erstes Ende 20 und ein zweites Ende 21 auf. Die Enden 20 und 21 liegen sich in Umfangsrichtung U gegenüber. Das erste Ende 20 weist eine Bohrung 22 auf. Die Bohrung 22 dient zur Aufnahme eines Verbindungselements 19. Auch das zweite Ende 21 weist eine Bohrung 23 auf. Die Bohrung 23 dient ebenfalls zur Aufnahme des Verbindungselements 19. Bei dem Ausführungsbeispiel der Fig. 2 ist das Verbindungselement 19 eine Schraube. Als Gegenstruktur für das Verbindungselement 19 kann die Bohrung 22 und/oder die Bohrung 23 ein Gewinde aufweisen. Ergänzend oder alternativ kann das Verbindungselement 19 auch mit einer nicht dargestellten Mutter zusammenwirken.

Das erste Ende 20 und das zweite Ende 21 sind so ausgebildet, dass sie sich zumindest in einem geschlossenen Zustand des Seitenrings 2 in Umfangsrichtung U zumindest teilweise überlappen. Dies ist beispielsweise in der Detailansicht in Fig. 6 erkennbar. Das erste Ende 20 weist eine Überlappfläche 24 auf. Die Überlappfläche 24 ist in eine axiale Richtung M des Wälzlagerkäfigs 1 gerichtet. Die Überlappfläche 24 ist dem Seitenring 4 zugewandt. Entsprechend weist das zweite Ende 21 eine Überlappfläche 27 auf. Die Überlappfläche 27 ist in eine axiale Richtung M des Wälzlagerkäfigs 1 gerichtet. Die Überlappfläche 27 befindet sich an einer dem Seitenring 4 abgewandten Seite des Endes 21. Die Überlappflächen 25 und 27 sind so ausgebildet, dass sie sich in einem geschlossen Zustand zumindest abschnittsweise berühren können. Bei einigen weiteren Ausführungsbeispielen können die Enden auch anders als beschrieben ausgebildet sein. Beispielseise können sich die Enden entgegengesetzt zu dem beschriebenen Ausführungsbeispiel überlappen.

Ferner weist das erste Ende 20 eine Stoßfläche 25 auf. Die Stoßfläche 25 ist in eine Umfangsrichtung U gerichtet. Die Stoßfläche 25 stellt das in Umfangsrichtung U am weitesten in Richtung des zweiten Endes 21 ragende Element des ersten Endes 20 dar. Das erste Ende 20 weist eine weitere Stoßfläche 26 auf. Die Stoßfläche 26 ist in Umfangsrichtung U zurückversetzt zu dem zweiten Ende 21 angeordnet. Die Stoßfläche 26 befindet sich in Umfangsrichtung U an einem der Stoßfläche 25 gegenüberliegenden Ende der Überlappfläche 24. Die Stoßflächen 25 und 26 erstrecken sich beide in eine axiale Richtung, ragen jedoch in entgegengesetzte Richtungen von der Überlappfläche 24 ab. Die Stoßfläche 26 und die Überlappfläche 24 können sich beispielsweise bei einer Herstellung der Öffnungsstelle 3 ergeben. Dazu kann beispielsweise ein im Wesentlichen Z-förmiger Schnitt in den Seitenring 2 eingebracht werden. Dabei können die Schenkel des Z-förmigen Schnitts beispielsweise rechte Winkel zueinander aufweisen. Entsprechend weist das zweite Ende 21 die beschriebene Überlappfläche 27 auf.

Auch bei dem zweiten Ende 21 ragen von der Überlappfläche zwei Stoßflächen 28 und 29 ab. Die Stoßfläche 28 ist in Umfangsrichtung U gerichtet. Sie befindet sich an einem von dem ersten Ende 20 in Umfangsrichtung U abgewandten Ende der Überlappfläche 27. Die Stoßfläche 28 kann in einem geschlossenen Zustand an der Stoßfläche 25 anliegen. Die Stoßfläche 29 ist in Umfangsrichtung U gerichtet. Die Stoßfläche 29 stellt das in Umfangsrichtung U am weitesten in Richtung des ersten Endes 20 weisende Element des zweiten Endes 21 dar. Die Stoßfläche 29 kann in einem geschlossenen Zustand des Seitenrings 2 an der Stoßfläche 26 anliegen. Die Stoßflächen 25 und 26 und 28 und 29 stellen einen radialen Anschlag der Öffnungsstelle 3 bzw. einer Schließfunktion des Seitenrings dar. Ferner ist in die Überlappfläche 24 eine Nut 30 eingebracht. Die Nut 30 erstreckt sich in Umfangsrichtung U. Entsprechend weist die Überlappfläche 27 einen Absatz 31 auf. Der Absatz 31 erstreckt sich ebenfalls in Umfangsrichtung U. Der Absatz 31 ist so ausgebildet, dass er in der Nut 30 aufgenommen werden kann. Mit anderen Worten ausgedrückt handelt es sich bei den Enden 20 und 21 der Öffnungsstelle 3 um formschlüssige Verbindungselemente. So kann bei manchen Ausführungsbeispielen ein besseres Positionieren der Enden 20 und 21 zueinander ermöglicht werden. Die Enden 21 und 22 können mit dem Verschlusselement 19 verschraubt werden.

Bei weiteren, nicht dargestellten Ausführungsbeispielen können die Enden auf eine andere Art und Weise ausgebildet sein. Beispielsweise können die Enden ohne Nut bzw. Absatz ausgebildet sein. Ergänzend oder alternativ können die Überlappflächen oder die Teilflächen andere Winkel als 90° einschließen.

Bei weiteren, nicht dargestellten Ausführungsbeispielen können die Enden auch mittels einer stumpfen Verbindungsart, also nicht überlappend, verbunden werden. Die beiden Enden können dazu auf jedwede Art und Weise miteinander verbunden werden. Beispielsweise können die Enden mittels einer Schraubverbindung, einer Schweißverbindung, einer Lötverbindung oder dergleichen verbunden werden. Die Schraubverbindung kann beispielsweise als einrastbare oder eingerastete Überwurfmutter, Mutter oder Hülse ausgebildet sein. Mit anderen Worten ausgedrückt ist an der Öffnungsstelle eine Schließfunktion vorgesehen bzw. weist diese eine Schließfunktion auf.

Fig. 13 zeigt eine schematische Darstellung einer Explosionsansicht des Wälzlagerkäfigs gemäß einem Ausführungsbeispiel.

Wie in Fig. 13 gezeigt, weist der Seitenring 2 eine Mehrzahl von Ausnehmungen 32 auf. Entsprechend weist der Seitenring 4 ebenfalls eine Mehrzahl von Ausnehmungen 33 auf. Der Seitenring 2 weist eine nach radial außen gerichtete Umfangsfläche 34 auf. Die Ausnehmungen 32 sind von dieser Umfangsfläche 34 in den Seitenring 2 eingebracht. Der Seitenring 4 weist ebenfalls eine nach radial außen gerichtete Umfangsfläche 35 auf. Die Ausnehmungen 33 sind von der Umfangsfläche 35 aus in den Seitenring 4 eingebracht. Jeweils eine Ausnehmung 32 des ersten Seitenrings 2 und eine Ausnehmung 33 des zweiten Seitenrings 4 sind an dergleichen Winkelposition des Wälzlagerkäfigs 1 eingebracht. Die Ausnehmungen 32 und 33 dienen jeweils zur Aufnahme eines Endes 36 bzw. 37 eines Steges 5. So kann bei manchen Ausführungsbeispielen eine bessere oder stabilere Verbindung zwischen den Stegen 5 und den Seitenringen 2 bzw. 4 ermöglicht werden. Die Ausnehmungen 32 und 33 weisen einen trapezförmigen Querschnitt auf. Analog weisen die Stege 5 ebenfalls einen trapezförmigen Querschnitt auf.

Bei einigen weiteren, nicht dargestellten Ausführungsbeispielen kann die Mehrzahl der Ausnehmungen auch an einer nach radial innen gerichteten Umfangsfläche des Seitenrings ausgebildet sein.

Bei weiteren, nicht dargestellten Ausführungsbeispielen können die Stege jedweden Querschnitt aufweisen. Der Querschnitt kann beispielsweise quadratisch, rechteckig, viereckig, vieleckig, dreieckig, rund, als Kreisscheibe, als Kreisringscheibe oder dergleichen ausgebildet sein. Beispielsweise können die Stege aus einem Vollmaterial hergestellt sein. Die Ausnehmungen können so ausgebildet sein, dass sie den Steg aufnehmen können. Beispielsweise können die Ausnehmungen einen Querschnitt aufweisen, der einer Form des Stegs entspricht. Bei weiteren, nicht dargestellten Ausführungsbeispielen können die Stege auf eine andere Art und Weise an den Seitenringen befestigt werden. Die Seitenringe können dann ggf. keinen Ausschnitt aufweisen. Beispielsweise können die Stege stumpf an den Seitenringen befestigt sein. Die Seitenringe können bei manchen Ausführungsbeispielen ohne großen Aufwand, kostengünstig hergestellt werden. Beispielsweise können die Seitenringe durch Walzen eines Flachmaterials oder als Drehteile hergestellt werden. Bei einigen weitern, nicht dargestellten Ausführungsbeispielen können die Seitenringe und Stege auch einstückig ausgebildet sein. Beispielsweise können die Taschen aus einem Band ausgestanzt sein.

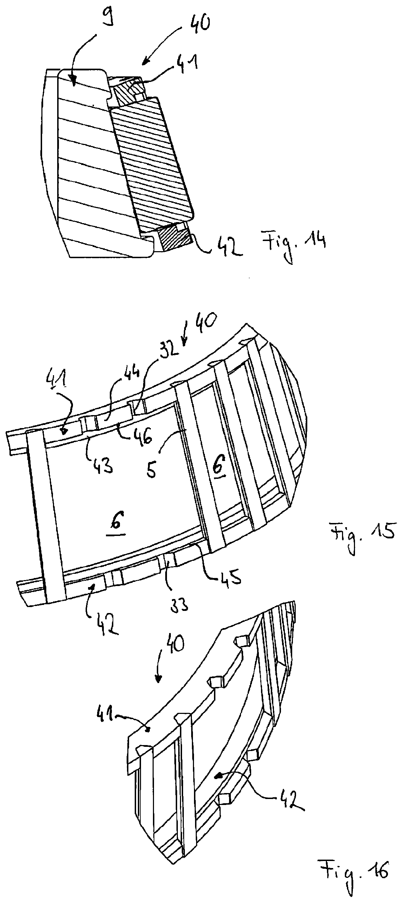

Fig. 14, 15 und 16 zeigen unterschiedliche schematische Darstellungen eines Wälzlagerkäfigs gemäß einem weiteren Ausführungsbeispiel.

Wie in Fig. 14 dargestellt, ist ein Wälzlagerkäfig 40 an einem Innenring 9 angeordnet. Der Wälzlagerkäfig 40 ist im Wesentlichen analog zu dem Wälzlagerkäfig 1 ausgebildet. Der Wälzlagerkäfig 40 weist einen ersten Seitenring 41 und einen zweiten Seitenring 42 auf. Der Wälzlagerkäfig 40 unterscheidet sich von dem Wälzlagerkäfig 1 in der Ausbildung der Seitenringe 41 und 42. Die Seitenringe 41 und 42 sind im Wesentlichen analog zu den Seitenringen 2 und 4 ausgebildet. Im Gegensatz zu den Seitenringen 2 und 4 weisen die Seitenringe 41 und 42 jeweils einen L-förmigen Querschnitt auf. Mit anderen Worten ausgedrückt weist der Seitenring 41 eine Anlagefläche 43 auf, wie in den Fig. 15 und 16 erkennbar. Die Anlagefläche 43 ragt von dem Seitenring 41 ab. Sie erstreckt sich zu dem Seitenring 42. Die Anlagefläche 43 erstreckt sich also von dem Seitenring 41 aus in die Tasche 6. Ferner weist die Anlagefläche 43 in eine Richtung nach radial außen eine kleinere Ausdehnung auf als der Seitenring 41 bzw. ein Hauptteil 44 des Seitenrings. Damit bildet die Anlagefläche 43 eine vergrößerte Anlagefläche für die Stege 5 aus. So kann beispielsweise eine bessere Unterstützung für die Stege 5 durch einen L-Fortsatz an dem Seitenring ermöglicht werden.

Der Übersichtlichkeit halber sind in den Fig. 15 und 16 einige Stege ausgeblendet. Analog zu den Seitenringen 2 und 4 weisen auch die Seitenringe 41 und 42 entsprechende Ausnehmung 32 und 33 zur Aufnahme der Stege 5 auf.

Bei einigen weiteren, nicht dargestellten Ausführungsbeispielen können die Seitenringe mit dem L-förmigen Querschnitt beispielsweise auch ohne die Ausnehmungen ausgebildet sein. Die Stege können dann beispielsweise nur so lang sein, dass sie zwischen die Seitenringe eingebracht werden können. Diese Länge kann beispielsweise einem Abstand zwischen einer Seitenfläche 45 des Seitenrings 42 und einer Seitenfläche 46 des Seitenrings 41 entsprechen. Die Seitenflächen 45 und 46 können dabei jeweils in eine axiale Richtung M gerichtet und einander zugewandt sein. Die Seitenflächen 45 und 46 können dabei auch Begrenzungsflächen für die Taschen 6 bilden. Dadurch, dass die Seitenringe 41 und 42 einen L-förmigen Querschnitt aufweisen, kann bei manchen Ausführungsbeispielen beispielsweise eine günstigere axiale Anlauffläche für die Wälzköper bzw. Rollen geschaffen werden.

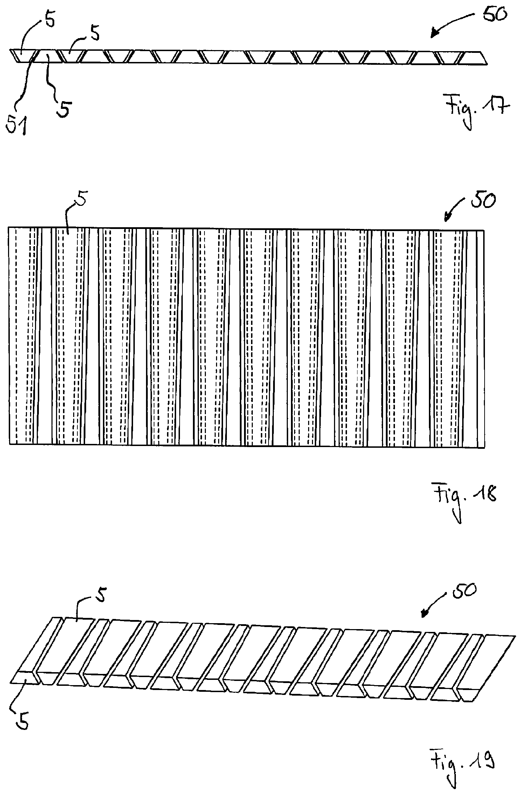

Die Fig. 17, 18 und 19 zeigen unterschiedliche schematische Darstellungen eines Blechstreifens mit einem Schneidespalt zur Herstellung der Stege des Wälzlagerkäfigs gemäß einem Ausführungsbeispiel.

Die Stege 5 werden aus einem in Fig. 17 gezeigten Blechstreifen 50 hergestellt. Dazu kann der Blechstreifen 50 beispielsweise mit einem Wasser-, Laserstrahl oder einem Erodierdraht geschnitten werden. Mit einem Längsschnitt kann ein Steg 5 von dem Blechstreifen 50 abgetrennt werden. Dazu ist bei manchen Ausführungsbeispielen nur ein Schnitt notwendig. Dies ist ggf. möglich, weil gleichzeitig eine um 180° verdrehte Rollenanlagefläche des benachbarten Steges 5 mitgeschnitten wird. Mit anderen Worten ausgedrückt können die Stege 5 eine Form aufweisen, die es erlaubt, dass die Stege 5 ohne Abfallmaterial aus dem Blechstreifen 50 ausgeschnitten werden können. Dadurch können die Stege 5 bei manchen Ausführungsbeispielen kostengünstig mit einem Wasserstrahl-, Laserschneid- oder Erodierverfahren hergestellt werden. In der Fig. 17 ist ein Schneidspalt 51 erkennbar. Der Schneidespalt 51 trennt jeweils zwei benachbarte Stege 5.

Mit anderen Worten ausgedrückt umfassen der Wälzlagerkäfig 1 und auch der Wälzlagerkäfig 40 einen oberen und einen unteren Seitenring 2, 4 bzw. 41, 42. An diesen werden die Stege 5 oder Stegsegmente stumpf oder in stegförmig ausgeschnittenen Ausnehmungen befestigt, beispielsweise mit einem lösbaren oder nicht lösbaren Verbindungsverfahren. Beispiele für solche Verfahren sind Schweißen, Nieten, Schrauben, Kleben, Löten oder dgl.. Das besondere an den Wälzlagerkäfigen 1 und 40 sind die radial getrennten Seitenringe 2 und 4 bzw. 41 und 42. Diese können bei manchen Ausführungsbeispielen zur Montage des Wälzlagerkäfigs 1 bzw. 40 über den Bord 13 bzw. Innenringbord aufgebogen werden. Dann geht der Rollenkranz bzw. Wälzlagerkäfig 1 oder 40 über den Innenringbord 13. Anschließend können die Seitenringe 2 und 4 bzw. 41 und 42 radial geschlossen werden. Die Seitenringe 2, 4, bzw. 41 und 42 können bei manchen Ausführungsbeispielen sogar einen geringen Ausgleich des Radialspiels bewirken.

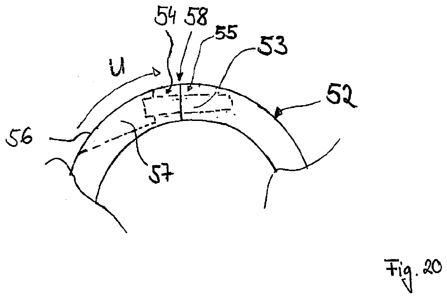

Fig. 20 zeigt eine schematische Darstellung einer Seitenansicht eines Seitenrings eines Wälzlagerkäfigs gemäß einem weiteren Ausführungsbeispiel.

Fig. 20 zeigt einen Seitenring 52 mit einer Öffnungsstelle 58. Die Öffnungsstelle 58 trennt ein erstes Ende 54 von einem zweiten Ende 55. Die Enden 54 und 55 sind in Umfangsrichtung U gegenüberliegend angeordnet und stoßen stumpf aneinander. Ferner umfasst der Seitenring 52 ein Verschlusselement 53. Das Verschlusselement 53 ist angeordnet, sodass es das Ende 54 und das Ende 55 des Seitenrings 52 in Umfangsrichtung miteinander verbindet. Dazu ist von einer nach radial außen gerichteten Umfangsfläche 56 des Seitenrings 52 eine Ausnehmung 57 in den Seitenring 52 eingebracht. Von dieser Ausnehmung 57 aus kann das Verschlusselement 53 durch das Ende 54 in das Ende 55 eingebracht werden. Beispielsweise kann das Ende 55 dazu ebenfalls bereits eine Bohrung aufweisen. Als Verschlusselement 53 oder Verschließmechanismus kann ggf. auf konventionelle Verschließmechanismen zurückgegriffen werden. Das Verschlusselement 53 ist bei manchen Ausführungsbeispielen ausgebildet, um den Seitenring 52 an der Öffnungsstelle 58, von einer nach radial nach außen gerichteten Umfangsfläche 56 aus, zu verbinden.

Durch die Ausgestaltung des Wälzlagerkäfigs 1 bzw. 40 können bei manchen Ausführungsbeispielen die Material- und Herstellungskosten erheblich reduziert werden. Ferner kann bei manchen Ausführungsbeispielen auf teures Druckwerkzeug oder aufwändige Herstellungsverfahren verzichtet werden. Bei manchen dieser konventionellen Herstellungsverfahren werden Rohlinge für Stahlblechkäfige für Großlager beispielsweise durch Drückwalzen hergestellt. Anschließend werden Taschen und eine Bohrung in einen Topfboden durch Laserschneiden eingebracht. Laserschneiden wird oft eingesetzt, weil bei manchen konventionellen Lösungen eine stanztechnische Taschenherstellung nur bis ca. 1100 mm möglich ist. Mit einem Laserverfahren können bei manchen Ausführungsbeispielen Bleche mit einer Dicke von bis zu 10 mm und einem Außendurchmesser von bis zu 1300 mm behandelt bzw. bearbeitet werden. Deswegen werden manche konventionelle Lagerkäfige spanend (z.B. Fräsen) hergestellt. Diese Herstellungsverfahren können sehr zeitaufwändig sein und ggf. eine Fünfachsfräsmaschine erfordern. Mit anderen Worten ausgedrückt kann mit dem Wälzlagerkäfig 1 bzw. 40 eine Stahlkäfigkonstruktion für Lager mit einem Außendurchmesser von bis zu 3000 mm oder mehr bereitgestellt werden. Bei anderen Ausführungsbeispielen kann der Wälzlagerkäfig 1 oder 40 auch andere Abmessungen aufweisen. Bei dem Wälzlagerkäfig 1 bzw. 40 als Stahlkäfigkonstruktion können zumindest die Seitenringe und die Stege aus Stahl hergestellt sein. Eventuell kann der Wälzlagerkäfig vollständig aus Stahl hergestellte sein.

Ferner kann bei manchen Ausführungsbeispielen auf komplizierte Montageverfahren verzichtet werden. Dies kann vor allem gegenüber konventionellen Lösungen, bei denen ein Musterinnenring mit einem abnehmbaren Bord hergestellt wird, um bei der Taschenherstellung die Schnappmontage zu simulieren, der Fall sein. Bei diesen konventionellen Lösungen sind oft schwer zu handhabende Bauteile bzw. ein schwer zu handhabender Musterinnenring vorhanden.

Mit dem Wälzlagerkäfig gemäß manchen Ausführungsbeispielen kann beispielsweise besonders bei Großlagern eine Montage und eine Herstellung vereinfacht werden. Trotzdem kann aber der Wälzlagerkäfig gemäß manchen Ausführungsbeispielen nicht nur, wie für die Ausführungsbeispiele beschrieben, für Großlager eingesetzt werden. Der Wälzlagerkäfig gemäß einigen Ausführungsbeispielen kann sich beispielsweise für jede Lagergröße und Lagerart eignen. Eine Seitenringform, Stegform bzw. Seitenring- und Steggestaltung können bei manchen Ausführungsbeispielen entsprechend auf die Lagerart und eine Wälzkörperform angepasst werden. Die Ausführung eines radial geöffneten Käfigs kann beispielsweise bei jeder Käfigvariante und -form, insbesondere bei der Montage, sinnvoll sein.

Mit anderen Worten ausgedrückt weist der Wälzlagerkäfig gemäß manchen Ausführungsbeispielen einen Spalt auf bzw. ist als Spaltkäfig ausgebildet.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können ggf. auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Wälzlagerkäfig
- 2: erster Seitenring
- 3: Öffnungsstelle
- 4: zweiter Seitenring
- 5: Steg
- 6: Tasche
- 7: Wälzkörper
- 8: Öffnungsstelle
- 9: Innenring
- 10: Innenbohrung
- 11: Umfangsfläche
- 12: Lauffläche
- 13: Bord
- 14: Bord
- 15: Kante
- 16: Lauffläche
- 17: Spalt
- 19: Verschlusselement
- 20: erstes Ende
- 21: zweites Ende
- 22: Bohrung
- 23: Bohrung
- 24: Überlappungsfläche
- 25: Stoßfläche
- 26: Stoßfläche
- 27: Überlappungsfläche
- 28: Stoßfläche
- 29: Stoßfläche
- 30: Nut
- 31: Absatz
- 32: Ausnehmung
- 33: Ausnehmung
- 34: Umfangsfläche
- 35: Umfangsfläche
- 36: Stegende
- 37: Stegende
- 40: Wälzlagerkäfig
- 41: erster Seitenring
- 42: zweiter Seitenring
- 43: Anlagefläche
- 44: Hauptteil
- 45: Seitenfläche
- 46: Seitenfläche
- 50: Blechstreifen
- 51: Schneidspalt
- 52: Seitenring
- 53: Verschlusselement
- 54: Ende
- 55: Ende
- 56: Umfangsfläche
- 57: Ausnehmung
- 58: Öffnungsstelle

- α: Winkelposition
- M: axiale Richtung
- U: Umfangsrichtung

## Patentansprüche

1. Wälzlagerkäfig (1, 40) mit
zumindest einem sich in Umfangsrichtung erstreckenden ersten Seitenring (2, 41, 52), der genau eine einzige Öffnungsstelle (3, 8, 58) aufweist, die ausgebildet ist, um den Seitenring (2, 41, 52) zu einer Montage des Seitenrings (2, 41, 52) zu öffnen, sodass ein Umfang des Seitenrings (2, 41, 52) aufgeweitet werden kann,
wobei die Öffnungsstelle (3, 8, 58) zwischen zwei benachbarten Stegen (5-a und 5-b) angeordnet ist, sodass der Wälzlagerkäfig (1, 49) an einer Tasche (6-a), die zwischen den beiden Stegen liegt (5-a und 5-b), teilbar ist;
wobei der Seitenring (2, 41) an der Öffnungsstelle (3, 8, 58) gegenüberliegende Enden (21, 22) aufweist, die sie sich in Umfangsrichtung zumindest teilweise überlappen oder mittels einer stumpfen Verbindungsart miteinander verbunden sind;
wobei der Wälzlagerkäfig als Werkstoff einen Stahl umfasst und einen Außendurchmesser aufweist, der größer als 500 mm ist;
umfassend einen zweiten sich in Umfangsrichtung erstreckenden Seitenring (4, 42),
der entweder eine Öffnungsstelle (8) aufweist, die ausgebildet ist, um den zweiten Seitenring (4, 42) zur Montage des zweiten Seitenrings (4, 42) zu öffnen, sodass ein Umfang des zweiten Seitenrings (4, 42) aufgeweitet werden kann, wobei der zweite Seitenring (4, 42) im geschlossenen Zustand einen größeren Durchmesser aufweist als der erste Seitenring (2, 41), oder
geschlossen ausgebildet ist, wobei in dem Fall der geschlossenen Ausbildung des zweiten Seitenrings (4, 42) dieser sowohl einen größeren Durchmesser aufweist als der erste Seitenring (2, 41) als auch einen größeren Durchmesser aufweist als ein Bord eines Innenrings (9).

2. Wälzlagerkäfig (1, 40) nach Anspruch 1, wobei die Öffnungsstellen (3, 8, 58) der beiden Seitenringen (2, 4, 41, 42) in axialer Richtung an der gleichen Winkelposition der Seitenringe (2, 4, 41, 42) angeordnet sind.

3. Wälzlagerkäfig (1, 40) nach einem der vorhergehenden Ansprüche, umfassend ein Verschlusselement (19, 53), das ausgebildet ist, um zumindest einen der Seitenringe (2, 4, 41, 42, 52) an der Öffnungsstelle (3, 8, 58), an der er geteilt ist, zu verbinden, sodass ein Umfang des Seitenrings (2, 4, 41, 42, 52) nach der Montage fixiert ist.

4. Wälzlagerkäfig (1, 40) nach Anspruch 3, wobei das Verschlusselement (19, 53) wiederlösbar ausgebildet ist.

5. Wälzlagerkäfig (1, 40) nach einem der vorhergehen Ansprüche, wobei zumindest einer der Seitenringe (2, 4, 41, 42,) eine Mehrzahl von Ausschnitten (32, 33) aufweist, in die die Mehrzahl der Stege (5) eingesetzt sind.

6. Wälzlagerkäfig (1, 40) nach einem der vorhergehenden Ansprüche, wobei der Seitenring (41, 42) einen L-förmigen Querschnitt aufweist, sodass der Seitenring (41) an einer Seite, die dem anderen Seitenring (42) zugewandt ist, eine Anlagefläche (43) für die Mehrzahl der Stege (5) aufweist.

7. Verfahren zur Montage eines Wälzlagerkäfigs (1, 40) umfassend:
a) Öffnen eines sich in Umfangsrichtung erstreckenden ersten Seitenrings (2, 41, 52) des Wälzlagerkäfigs (1, 40) an einer einzigen Öffnungsstelle (3, 58), wobei die Öffnungsstelle (3, 58) zwischen zwei benachbarten Stegen (5-a und 5-b) angeordnet ist, sodass der Wälzlagerkäfig (1, 49) an einer Tasche (6-a), die zwischen den beiden Stegen liegt (5-a und 5-b), teilbar ist;
Öffnen eines sich in Umfangsrichtung erstreckenden zweiten Seitenrings (4, 42), der eine Öffnungsstelle (8) aufweist, die ausgebildet ist, um den zweiten Seitenring (4, 42) zur Montage des zweiten Seitenrings zu öffnen, sodass ein Umfang des zweiten Seitenrings aufgeweitet werden kann, wobei der zweite Seitenring (4, 42) im geschlossenen Zustand einen größeren Durchmesser aufweist als der erste Seitenring (2, 41), oder
Bereitstellen eines sich in Umfangsrichtung erstreckenden zweiten Seitenring (4, 42), der geschlossen ausgebildet ist;
wobei in dem Fall der geschlossenen Ausbildung des zweiten Seitenrings (4, 42) dieser sowohl einen größeren Durchmesser aufweist als der erste Seitenring (2, 41) als auch einen größeren Durchmesser aufweist als ein Bord eines Innenrings (9);
b) Positionieren des Wälzlagerkäfigs (1, 40) mit dem geöffneten ersten und zweiten Seitenringen (2, 4, 41, 42) oder dem geöffneten ersten Seitenring (2, 41) und dem geschlossenen zweiten Seitenring (4,42) an dem Innenring des Wälzlagers, und
c) Verschließen der Seitenringe (2, 4, 41, 42, 52) des Wälzlagerkäfigs (1, 40) an den Öffnungsstellen (3, 8, 58) oder Verschließen des ersten Seitenrings (2, 41, 52) des Wälzlagerkäfigs (1, 40) an der Öffnungsstelle (3, 58), sodass gegenüberliegende Enden (21, 22) des ersten Seitenrings (2, 41) oder des ersten und des zweiten Seitenrings (2, 4, 41, 42, 52) an der Öffnungsstelle (3, 8, 58) sich in Umfangsrichtung zumindest teilweise überlappen oder mittels einer stumpfen Verbindungsart miteinander verbunden sind.

## Claims

1. Anti-friction bearing cage (1, 40) having
at least one first side ring (2, 41, 52) which extends in the circumferential direction and has precisely one single opening point (3, 8, 58) which is configured to open the side ring (2, 41, 52) for assembly of the side ring (2, 41, 52), with the result that a circumference of the side ring (2, 41, 52) can be widened,
the opening point (3, 8, 58) being arranged between two adjacent webs (5-a and 5-b), with the result that the anti-friction bearing cage (1, 49) can be split at a pocket (6-a) which lies between the two webs (5-a and 5-b) ;
the side ring (2, 41) having, at the opening point (3, 8, 58), ends (21, 22) which lie opposite one another and overlap at least partially in the circumferential direction or are connected to one another by means of a butt joint type;
the anti-friction bearing cage comprising a steel as material and having an external diameter which is greater than 500 mm;
comprising a second side ring (4, 42) which extends in the circumferential direction and
either has an opening point (8) which is configured to open the second side ring (4, 42) in order to assemble the second side ring (4, 42), with the result that a circumference of the second side ring (4, 42) can be widened, the second side ring (4, 42) having a greater diameter in the closed state than the first side ring (2, 41), or
is of closed configuration, the second side ring (4, 42) having, in the case of the closed configuration thereof, both a greater diameter than the first side ring (2, 41) and a greater diameter than a rim of an inner ring (9).

2. Anti-friction bearing cage (1, 40) according to Claim 1, the opening points (3, 8, 58) of the two side rings (2, 4, 41, 42) being arranged at the same angular position of the side rings (2, 4, 41, 42) in the axial direction.

3. Anti-friction bearing cage (1, 40) according to either of the preceding claims, comprising a closure element (19, 53) which is configured to connect at least one of the side rings (2, 4, 41, 42, 52) at the opening point (3, 8, 58), at which it is split, with the result that a circumference of the side ring (2, 4, 41, 42, 52) is fixed after the assembly.

4. Anti-friction bearing cage (1, 40) according to Claim 3, the closure element (19, 53) being of releasable configuration.

5. Anti-friction bearing cage (1, 40) according to one of the preceding claims, at least one of the side rings (2, 4, 41, 42) having a plurality of cut-outs (32, 33), into which the plurality of webs (5) are inserted.

6. Anti-friction bearing cage (1, 40) according to one of the preceding claims, the side ring (41, 42) having an L-shaped cross section, with the result that the side ring (41) has a contact face (43) for the plurality of webs (5) on a side which faces the other side ring (42).

7. Method for assembling an anti-friction bearing cage (1, 40) comprising:
a) opening of a first side ring (2, 41, 52) of the anti-friction bearing cage (1, 40) at a single opening point (3, 58), which first side ring (2, 41, 52) extends in the circumferential direction, the opening point (3, 58) being arranged between two adjacent webs (5-a and 5-b), with the result that the anti-friction bearing cage (1, 49) can be split at a pocket (6-a) which lies between the two webs (5-a and 5-b);
opening of a second side ring (4, 42) which extends in the circumferential direction and has an opening point (8), which is configured to open the second side ring (4, 42) for assembly of the second side ring, with the result that a circumference of the second side ring can be widened, the second side ring (4, 42) having a greater diameter in the closed state than the first side ring (2, 41), or
providing of a second side ring (4, 42) which extends in the circumferential direction and is of closed configuration;
the second side ring (4, 42) having, in the case of the closed configuration thereof, both a greater diameter than the first side ring (2, 41) and a greater diameter than a rim of an inner ring (9);
b) positioning of the anti-friction bearing cage (1, 40) with the open first and second side rings (2, 4, 41, 42) or the open first side ring (2, 41) and the closed second side ring (4, 42) on the inner ring of the anti-friction bearing, and
c) closing of the side rings (2, 4, 41, 42, 52) of the anti-friction bearing cage (1, 40) at the opening points (3, 8, 58) or closing of the first side ring (2, 41, 52) of the anti-friction bearing cage (1, 40) at the opening point (3, 58), with the result that ends (21, 22) of the first side ring (2, 41) or of the first and the second side ring (2, 4, 41, 42, 52), which ends (21, 22) lie opposite one another, overlap at least partially in the circumferential direction at the opening point (3, 8, 58) or are connected to one another by means of a butt joint type.

## Revendications

1. Cage de roulement (1, 40) comprenant
au moins une première bague latérale (2, 41, 52) qui s'étend dans la direction périphérique et qui comporte un seul emplacement d'ouverture (3, 8, 58) qui est formé pour ouvrir la bague latérale (2, 41, 52) pour le montage de la bague latérale (2, 41, 52) de manière à pouvoir élargir la périphérique de la bague latérale (2, 41, 52),
l'emplacement d'ouverture (3, 8, 58) étant disposé entre deux nervures adjacentes (5-a et 5-b) de sorte que la cage de roulement (1, 49) puisse être divisée au niveau d'une poche (6-a) qui se trouve entre les deux nervures (5-a et 5-b) ;
la bague latérale (2, 41) comportant à l'emplacement d'ouverture (3, 8, 58) des extrémités opposées (21, 22) qui se chevauchent au moins partiellement dans la direction périphérique ou qui sont reliées entre elles à l'aide d'un type de liaison bout à bout ;
la cage de roulement comprenant comme matériau un acier et ayant un diamètre extérieur qui est supérieur à 500 mm ;
la cage de roulement comprenant en outre une deuxième bague latérale (4, 42) qui s'étend dans la direction périphérique et comporte soit un emplacement d'ouverture (8) conçu pour ouvrir la deuxième bague latérale (4, 42) pour monter la deuxième bague latérale (4, 42) de manière à pouvoir élargir la périphérie de la deuxième bague latérale (4, 42), la deuxième bague latérale (4, 42) ayant à l'état fermé un diamètre qui est supérieur à celui de la première bague latérale (2, 41), ou
qui est conçue pour être fermée, la deuxième bague latérale (4, 42) ayant un diamètre qui est supérieur à celui de la première bague latérale (2,41) et un diamètre qui est supérieur à celui d'un bord d'une bague intérieure (9), lorsque la deuxième bague latérale est conçue pour être fermée.

2. Cage de roulement (1, 40) selon la revendication 1, les emplacements d'ouverture (3, 8, 58) des deux bagues latérales (2, 4, 41, 42) étant disposés à la même position angulaire des bagues latérales (2, 4, 41, 42) dans la direction axiale.

3. Cage de roulement (1, 40) selon l'une des revendications précédentes, comprenant un élément de fermeture (19, 53) qui est conçu pour relier au moins une des bagues latérales (2, 4, 41, 42, 52) à l'emplacement d'ouverture (3, 8, 58) où elle est divisée de manière à fixer la périphérie de la bague latérale (2, 4, 41, 42, 52) après le montage.

4. Cage de roulement (1, 40) selon la revendication 3, l'élément de fermeture (19, 53) étant conçu pour être détachable.

5. Cage de roulement (1, 40) selon l'une des revendications précédentes, l'une au moins des bagues latérales (2, 4, 41, 42) comportant une pluralité de découpes (32, 33) dans lesquelles la pluralité de nervures (5) sont insérées.

6. Cage de roulement (1, 40) selon l'une des revendications précédentes, la bague latérale (41, 42) ayant une section transversale en forme de L de sorte que la bague latérale (41) présente, sur un côté dirigé vers l'autre bague latérale (42), une surface de contact (43) destinée à la pluralité de nervures (5).

7. Procédé de montage d'une cage de roulement (1, 40) comprenant les étapes suivantes :
a) ouvrir une première bague latérale (2, 41, 52), s'étendant dans la direction périphérique, de la cage de roulement (1, 40) à un seul emplacement d'ouverture (3, 58), l'emplacement d'ouverture (3, 58) étant disposé entre deux nervures adjacentes (5-a et 5-b) de telle sorte que la cage de roulement (1, 49) puisse être divisée au niveau d'une poche (6-a) qui est située entre les deux nervure (5-a et 5-b) ;
ouvrir une deuxième bague latérale (4, 42) qui s'étend dans la direction périphérique et qui comporte un emplacement d'ouverture (8) qui est conçu pour ouvrir la deuxième bague latérale (4, 42) pour monter la deuxième bague latérale de manière à pouvoir élargir la périphérie de la deuxième bague latérale, la deuxième bague latérale (4, 42) ayant à l'état fermé un diamètre qui est supérieur à celui de la première bague latérale (2, 41), ou
produire une deuxième bague latérale qui s'étend dans la direction périphérique (4, 42) et qui est conçue pour être fermée ;
la deuxième bague latérale (4, 42) ayant un diamètre qui est supérieur à celui de la première bague latérale (2, 41) et un diamètre qui est supérieur à celui d'un bord d'une bague intérieure (9), lorsque la deuxième bague latérale (4, 42) est conçue pour être fermée ;
b) positionner la cage de roulement (1, 40) avec les première et deuxième bagues latérales (2, 4, 41, 42) ouvertes ou la première bague latérale (2, 41) ouverte et la deuxième bague latérale (4, 42) fermée sur la bague intérieure du palier de roulement, et
c) fermer les bagues latérales (2, 4, 41, 42, 52) de la cage de roulement (1, 40) aux emplacements d'ouverture (3, 8, 58) ou fermer la première bague latérale (2, 41, 52) de la cage de roulement (1, 40) à l'emplacement d'ouverture (3, 58) de telle sorte que des extrémités opposées (21, 22) de la première bague latérale (2, 41) ou des première et deuxième bagues latérales (2, 4, 41, 42, 52) à l'emplacement d'ouverture (3, 8, 58) se chevauchent au moins partiellement dans la direction périphérique ou sont reliées entre elles à l'aide d'un type de liaison bout à bout.
